# EUROPEAN PATENT SPECIFICATION

(11) **EP 1 598 395 B1**
(45) Date of publication and mention of the grant of the patent: **19.01.2011**
(21) Application number: 04713991.0
(22) Date of filing: 24.02.2004
(51) Int. Cl.: C08L 23/08, E01C 7/30, C08F 210/02, C08L 95/00

(54) **PAVING RESIN COMPOSITION AND METHOD FOR PRODUCING PAVING ASPHALT COMPOSITION**
HARZZUSAMMENSETZUNG FÜR STRASSEN- BZW. GEHWEGBELAG UND VERFAHREN ZUR HERSTELLUNG EINER ZUSAMMENFASSUNG FÜR STRASSEN- BZW. GEHWEGASPHALT
COMPOSITION DE RESINE DE PAVAGE ET PROCEDE DE PRODUCTION D'UNE COMPOSITION DE BITUME ROUTIER

(30) Priority: 25.02.2003 JP 2003047026; 10.09.2003 WO PCT/JP03/11536
(43) Date of publication of application: 23.11.2005
(73) Proprietor: TODA KOGYO CORPORATION, Hiroshima-shi, Hiroshima 732-0824 (JP)
(72) Inventor: HAKATA, Toshiyuki, Toda Kogyo Corporation, Otake-shi, Hiroshima 7390652 (JP); MAEDA, Atsushi, Toda Kogyo Corporation Osaka Office, Yodogawa-ku 532-0003 Osaka-shi,Osaka (JP); MASUI, Ryoma, Toda Pigment Co., Ltd., Mitsu-gun, Okayama 7093124 (JP)
(74) Representative: Vossius & Partner
(86) International application number: PCT/JP2004/002154
(87) International publication number: WO 2004/076554

(56) References cited:
- EP-A- 0 340 210
- EP-A- 0 568 021
- JP-A- 3 227 381
- JP-A- 7 157 351
- JP-A- 2002 537 435
- US-A- 3 309 329
- US-A- 4 008 095
- US-A- 4 248 770
- US-A- 5 268 704
- US-A- 5 990 206

## Description

### TECHNICAL FIELD

The present invention relates to a paving resin composition, and a method for producing a paving asphalt composition, more particularly, to a paving resin composition excellent in storage stability, easy to be melted at the time of mixing with an aggregate, and solid at a normal temperature. The present invention also relates to which a method for producing a paving asphalt composition, which contains the paving resin composition and is excellent in coloration and discoloration resistance of a pigment and with which the workability and work environments are improved.

### BACKGROUND OF THE INVENTION

Recently, in a variety of cases, including a case of coloring a paving face such as a sidewalk, an open space, a bridge and the like with various colors for presenting fine appearance, a case of coloring a pedestrian crossing and a tunnel for traffic safety, or a case of coloring a crotch of a street, a bus stop, and the like for improving the function of the street, so-called color paving has been carried out.

Generally, the color paving is carried out using a colored aggregate and using a pigment for a binder.

In the case of the former, there are natural ones, such as silica sand and limestone, and artificial ones such as so-called light color aggregate.

They are all white and many of them are expensive.

On the other hand, with respect to the latter, there is a method for mixing a pigment to a heated asphalt mixture, however, the heated asphalt itself is originally dark brown and even if a pigment is added, it is difficult to provide the chromaticity or brightness of the pigment itself.

To solve the above-mentioned problems, there is a method for mixing a synthetic resin such as a petroleum type resin and an epoxy resin with a pigment. This method can make color paving with various light colors possible, however, it requires washing of facilities in the case of using existing asphalt facilities and inevitably involves complicated work and also it is required to transport the asphalt mixture in heated and melted state to a work site and therefore, it is needed to transport the mixture in a large quantity on a lorry to inevitably result in increased costs in the case of a small scale paving. Moreover, in the case of mixing a pigment with a mixer, the pigment in fine powder state is scattered to the ambient environments to cause various problems, for example, adverse effects on workers or - worsening of working environments.

To solve such problems, Japanese Patent Application Laid-Open (JP-A) No. 51-49532 reports cobble stone size or flaky molded bodies containing thermoplastic resins such as natural modified rosin resins and rosin polyesters, which are solid at a normal temperature, epoxy resins, and color pigments such as extender pigments. However, they are not used for paving after being mixed with aggregates, but at first the resin composition is heated, melted and used for paving, and then aggregates are spread and therefore, there occurs a problem in adhesion of the aggregates and the resin composition.

Japanese Patent No. 2,516,445 reports a granular or small lump type asphalt admixture containing commercialized asphalt as a thermoplastic resin and inorganic coloration pigment powders. However, the thermoplastic resin used here is a resin composition commercialized for so-called color paving and it is in a half-solid state itself at a normal temperature, the asphalt admixture is only a mixture obtained by mixing the commercialized asphalt and the pigments and crushing the mixture to certain sizes and therefore, there is a problem that the crushed particles of the admixture are stuck to one another at a normal temperature, especially in summer time.

Further, in the case the temperature is decreased at the time of a paving work, the fluidity of the asphalt composition is worsened to result in a possible problem in difficulty of a spreading and leveling work.

To prevent adhesion, Japanese Patent No. 2,562,094 reports a granular asphalt obtained by mixing a water suspension of sulfates, silicates, carbonates, hydroxides, and oxides of alkaline earth metals and zinc with commercialized asphalt and granulating and drying the mixture. The characteristic of this technique is that the above-mentioned fine powders are used as so-called suspension stabilizers so as to suspend the asphalt, which is an oil component, in water and the use amount of the powders is consequently so high as to be 10 to 200 parts based on the amount of asphalt and since the fine powders contain a large quantity of water, there occurs a foaming problem at the time of producing an admixture by mixing the granular asphalt with aggregates and further it results in a problem that the work is dangerous and takes a long time.

Further, Japanese Patent Application Publication (JP-B) No. 58-10435 reports mixtures containing thermoplastic resins such as petroleum resins, petroleum type plasticizers with 200 or higher average molecular weight, and 0.1 to 5 parts by weight of vinyl acetate-ethylene copolymers. However, there is no description of the size and morphology of the obtained resin compositions and all of the compositions have a softening point of 45°C or lower and are in semi-solid state at a normal temperature and at the time of using them, the compositions require to be heated and melted previously in a lorry vehicle or the like and their handling and workability is thus problematic.

Japanese PatentApplication Laid-Open (JP-A) No. 62-189203 reports mixtures obtained by mixing 3 to 20 parts by weight of rubber type thermoplastic high molecular weight polymers (C component) and 0.3 to 15 parts by weight of urethane polymers (D component) of diene type liquid rubbers to mixtures of thermoplastic resins (A component) such as petroleum resins and petroleum type process oils (B component). However, the softening points of these resin compositions are all as low as 30 to 50°C and as described above, the mixtures are in semi-solid state at a normal temperature to result in handling problems.

Further, Japanese Patent Application Laid-Open (JP-A) No. 4-359063 reports color paving binder compositions obtained by mixing 2 to 6 parts by weight of styrene-butadiene-styrene resins, 2 to 6 parts by weight of ethyl acrylate, ethylene ethyl acrylate, or ethylene vinyl acetate based on 100 parts by weight of base materials containing aromatic process oils and dicyclopentadiene type petroleum resins. However, there is no description of the morphology of the obtained binder compositions and further, oil type liquid substances exist in a ratio of 50% or more in the entire resin compositions and the obtained resin compositions are also in semi-solid state to result in a problem of handling difficulty. Further, basically, to produce admixtures, it is needed to feed the compositions to a mixer after the compositions are previously heated and melted by a lorry vehicle or the like and thus there is also a problem of workability.

Japanese Patent No. 2,688,447 reports color paving binder compositions which indispensably contain petroleum resins, aromatic heavy mineral oils, thermoplastic elastomers, and liquid maleated organic compounds having an average molecular weight of 300 to 10,000 and an acid value of 10 to 200. Although there is description that an ethylene-vinyl acetate copolymer and the like may be added as the thermoplastic elastomers, the use amount is small and oil type liquid substances exist in a ratio of 50% or more in the entire resin compositions and the obtained resin compositions are also in semi-solid state having a softening point of 50°C or below to result in a problem of handling difficulty, similarly as described above. Further, there is no description of the morphology of the color paving binder compositions at all.

The Japanese Patent Application Publication (JP-B) No. 49-15469 reports a method for mixing plasticizers and pigments, based on necessity, with heated mixtures of polyethylene waste products and 20 to 40% of petroleum resins on the basis of polyethylene. However, the method is insufficient in fusion and wettability to aggregates and also in strength of mixtures with aggregates to result in a problem of durability of a paved face.

In view of the above situation, it is an object of the present invention to provide a paving resin composition in small lumps which is melted within a short time, excellent in wettability and adhesion property to aggregates, and capable of providing a paved face excellent in durability and free from problems of deformation during summer and cracking during winter.

Another object of the present invention is to provide a paving resin composition in small lumps, containing a pigment and a specified thermoplastic resin composition, which does not cause any powder dust generation problem even in work sites, and is suitable for paving while being mixed with aggregates within a short time-.

Further, an other object of the present invention is to provide a paving asphalt composition which is free from discoloration with lapse of time and easy to be spread and leveled in paving work ground.

### DISCLOSURE OF THE INVENTION

The inventors of the present invention have made various investigations to solve the above-mentioned problems and consequently have found that the problems could be solved by a thermoplastic resin composition in small lumps containing a specified amount of a specified ethylene-vinyl acetate copolymer, thus have completed the present invention.

That is, the present invention according to claim 1 provides a paving resin composition which comprises a thermoplastic resin composition in small lumps of 2 to 30 mm as an average value of the maximum diameter, wherein the thermoplastic resin composition contains 30 to 70% by weight of an ethylene-vinyl acetate copolymer having a vinyl acetate content of 20 to 45% by weight and a melting temperature of 40 to 100°C,
and 30 to 70% by weight in total of petroleum type resins and a viscosity adjustment agent in which the viscosity adjustment agent is in an amount of at highest 25% by weight.

The present invention according to claim 2 provides the paving resin composition of claim 1, wherein the viscosity adjustment agent is at least one substance selected from process oils, liquid rubbers, epoxy resins, rosins, and low density polyethylenes.

The present invention according to claim 3 provides the paving resin composition of any one of claims 1 or 2, wherein the ethylene-vinyl acetate copolymer has a melt flow rate of 50 to 3,000 g/10 min.

The present invention according to claim 4 provides the paving resin composition of any one of claims 1 to 3 which further contains 5 to 50 parts by weight of a pigment based on 100 parts by weight of the thermoplastic resin composition.

The present invention according to claim 5 provides a method for producing a paving asphalt composition which comprises the steps of:
directly throwing the paving resin composition as defined in any one of claims 1 to 4 into a mixer without passing through a measuring apparatus, and
carrying out mixing of 3 to 10% by weight of the paving resin composition with 97 to 90% by weight of an aggregate at 150 to 200°C.

The present invention according to claim 6 provides the method for producing a paving asphalt composition of claim 5, previously heating the aggregate at 160 to 220°C.

The present invention according to claim 7 provides the use of the paving resin composition as defined in any one of claims 1 to 4 for preparing a paving asphalt composition which contains 3 to 10 % by weight of the paving resin composition and 97 to 90 % by weight of an aggregate.

### BEST MODES OF THE CARRYING OUT THE INVENTION

The constitutions of the present invention will be described in more detail below.

The ethylene-vinyl acetate copolymer in the present invention has a vinyl acetate content of 20 to 45% by weight and preferably 28 to 45% by weight.

If the content of vinyl acetate is less than 20% by weight, the flexibility of the obtained thermoplastic resin composition becomes insufficient and in the case of paving using a paving resin composition obtained by forming the composition into small lumps, it results in occurrence of cracks in the paved face and this phenomenon becomes significant particularly in winter seasons.

On the other hand, if the content of vinyl acetate exceeds 45% by weight, the melting property is worsened and the wettability of aggregate becomes insufficient, and in the case of paving using a paving resin composition obtained by forming the composition into small lumps, it results in occurrence of cracks in the paved face.

The melting temperature of the ethylene-vinyl acetate copolymer is 40 to 100°C and preferably 50 to 90°C.

If the melting temperature is lower than 40°C, the obtained thermoplastic resin composition becomes sticky and is thus impossible to be formed into the desired small lumps.

On the other hand, if the melting temperature exceeds 100°C, the temperature for melting the composition and mixing the composition with the aggregate is required to be high and the time takes long, resulting in a problem of workability.

Further, the melt flow rate of the ethylene-vinyl acetate is preferably 50 to 3,000 g/10 min and further preferably 60 to 2,200 g/10 min.

If the melt flow rate is lower than 50 g/10 min, the temperature for melting the composition and mixing the composition with the aggregate is required to be high and the time takes long, resulting in a problem of workability in some cases.

On the other hand, if the melt flow rate exceeds 3,000 g/10 min, it may result in occurrence of cracks in the paved face.

In the present invention, as other thermoplastic resins petroleum type resins are used together with the ethylene-vinyl acetate copolymer. As the petroleum type resins, those having a softening point of 70 to 150°C are preferable and those having a softening point of 70 to 120°C are more preferable.

If the softening point is lower than 70°C, the obtained thermoplastic resin composition becomes sticky and thus it sometimes becomes difficult to make the composition into the desired small lumps.

On the other hand, if the softening point exceeds 150°C, the temperature for melting the composition and mixing the composition with the aggregate is required to be high and the time takes long, resulting in a problem of workability in some cases.

The melt viscosity of the petroleum type resins is preferably in a range of 100 to 1,000 cps and more preferably in a range of 100 to 800 cps at 160°C.

If the melt viscosity is lower than 100 cps, there may occur a problem in durability of the paved street face.

On the other hand, if the melt viscosity exceeds 1,000 cps, the wettability and adhesion property to the aggregate is inferior and there may occur a problem in durability of the paved street face.

Also, as the petroleum type resins, aliphatic type resins produced from C5 fractions, aromatic type resins produced from C9 fractions, or C5C9 copolymer type petroleum resins produced from both, and cyclopentadiene type petroleum resins can be used. They may be used alone or in combination of two or more, based on the necessity.

Further, as other additives, viscosity adjustment agents are used. As viscosity adjustment agents petroleum type process oils and liquid rubbers, epoxy resins, rosins, and low density polyethylenes and the like may be used alone or in combination of two or more, based on the necessity. Addition of them improves the viscosity of the thermoplastic resin composition and wettability to the aggregate.

As the petroleum type process oils, those having a flash point of 260°C or higher are preferable. Practically, lubricating oils and heavy mineral oils and the like may be used.

As the liquid rubbers, terpene type polymers, liquid polybutadiene, and liquid polybutene and the like may be used.

In the paving resin composition of the present invention, the content of the ethylene-vinyl acetate copolymer is 30 to 70% by weight and preferably 30 to 60% by weight.

If the content of the ethylene-vinyl acetate copolymer is less than 30% by weight, the flexibility of the thermoplastic resin composition becomes insufficient and accordingly, it may result in occurrence of cracks in the paved face and this problem particularly becomes significant in winter seasons.

On the other hand, if it exceeds 70% by weight, the wettability to the aggregate becomes insufficient and the adhesion property to the aggregate becomes problematic. Further, the compatibility with petroleum type resins is also deteriorated to make it impossible to carry out street paving excellent in durability.

The content in total of other thermoplastic resins and viscosity adjustment agent is 30 to 70 % by weight and preferably 40 to 70% by weight. However, the content of the viscosity adjustment agent in the total amount is at highest 25% by weight, and preferably 2 to 25% by weight.

If the content in total of other thermoplastic resins and viscosity adjustment agent is less than 30 % by weight, the melting property of the resin composition becomes insufficient in some cases and on the other hand, if it exceeds 70% by weight, the flexibility of the resin composition becomes insufficient and accordingly, it may result in occurrence of cracks in the paved face.

If the content of the viscosity adjustment agent exceeds 25% by weight, the obtained thermoplastic resin composition becomes sticky and is thus impossible to be formed into small lumps, or the small lumps are stuck to each other with lapse of time, or the wettability and adhesion property to the aggregate is worsened and there may occur a problem in durability of the paved street face in some cases.

In the present invention, a pigment may be used, based on the necessity. The pigment may be inorganic pigments or organic pigments. Especially, in terms of the heat resistance and weathering resistance, the inorganic pigments are preferable.

As the inorganic pigments, hydrated yellow iron oxide (goethite), red iron oxide (rouge), green chromium oxide, white titanium oxide and the like can be employed. A pigment having improved heat resistance can also be employed. Further, extender pigments such as calcium carbonate, talc, clay and the like can be used. Two or more of these pigments may be used in combination.

Use of magnetic particles such as ferrites provides a function based on the magnetism such as magnetic induction.

The content of the pigments is generally 5 to 50 parts by weight to 100 parts by weight of the thermoplastic resin composition. If it is less than 5 parts by weight, the effect of addition of the pigment becomes insufficient and on the other hand, if it exceeds 50 parts by weight, the wettability to the aggregate becomes insufficient to result in occurrence of a problem in adhesion to the aggregate.

To further prevent adhesion of a paving resin composition in small lumps, the above-mentioned inorganic pigments, or economical minerals such as calcium carbonate, clay, talc, silica sand, and bentonite, or lubricants such as magnesium stearate, calcium stearate and barium stearate may be added. One or more of these powders for adhesion prevention may be used in combination. To be more effective, the powders may be stuck to the surface of the obtained paving resin composition in small lumps and for example, the powders may be sprayed on strands coming out of an extruder and then the strands are formed into small lumps with a desired size or the paving resin composition is formed into small lumps and coated with the powders.

The addition amount of these powders for adhesion prevention is generally 0.1 to 5 parts by weight based on 100 parts by weight of the thermoplastic resin composition.

In the case of pigments, there is no problem, however in the case of using the lubricants, the use amount is preferable to be as low as possible. Accordingly, it is preferably 5 parts by weight or less. On the other hand, if it is less than 0.1 parts by weight, the addition effect cannot be sufficient.

A thermoplastic resin composition as defined above and further containing other additives at respectively prescribed ratios, based on the necessity, is heated and kneaded at 100 to 180°C to thus obtain a paving resin composition. Industrially, the composition is kneaded by a uniaxial or biaxial extruder, cooled and crushed by a pelletizer into the desired size to obtain the paving resin composition in small lumps of the present invention.

In the case of mixing with a pigment, prescribed resins and the pigment are mixed by a mixer such as a Henshel mixer, a V-type blender or the like before they are led to an extruder, then they are subjected to the respective treatments of kneading, cooling, and crushing to obtain the paving resin composition in small lumps of the present invention.

The size of the small lumps is 2 to 30 mm as an average value of the maximum diameter.

If it is smaller than 2 mm, adhesion of the paving resin composition itself tends to occur easily during storage and on the other hand, if it exceeds 30 mm, in the case of producing an admixture by mixing the composition with an aggregate, it tends to cause a problem that the melting work takes a long time.

The paving resin composition obtained in the above manner is wrapped in polybags of 5 kg or 10 kg capacity. Accordingly, at the time of preparing a paving asphalt composition as described below, the composition may directly be fed into a mixer from the wrapped state without the passage of a measurement apparatus and thus the measurement can be carried out simultaneously with feeding and the workability is remarkably improved.

A paving asphalt composition which is produced according to the method of present invention contains 3 to 10% by weight of the above-mentioned paving resin composition and 97 to 90% by weight of an aggregate. If the amount of the paving resin composition is less than 3% by weight, the strength of the paving asphalt composition is weak and cracking or the like tends to occur. On the other hand, if it exceeds 10% by weight, rutting of the paved face tends to easily occur during summer time.

A preferable preparation method of the paving asphalt composition is a method carried out by directly throwing the paving resin composition in wrapped state into a mixer without passing the paving resin composition through a measurement apparatus and mixing the composition with an aggregate at 150 to 200°C, more preferably 150 to 180°C. If the temperature is lower than 150°C, the workability in the case of laying the obtained asphalt composition may possibly be decreased and on the other hand, if it exceeds 200°C, there may occur a problem that the resin is partially deteriorated and the pigment is discolored. The mixing time is about 30 to 60 seconds. If it is shorter than 30 seconds, the mixing may be insufficient and on the other hand, even if it exceeds 60 seconds, the effect is not so much changed and the workability is rather deteriorated. In this case, the aggregate may be heated previously at 160 to 220°C and then thrown into the mixer, so that the paving resin composition can be melted within a short time and the aggregate can be sufficiently wetted. If it is lower than 160°C or exceeds 220°C, it becomes difficult to adjust the temperature to the above-mentioned preferable mixing temperature.

In the case the paving resin composition contains a pigment, it is not necessary to add only the pigment to the mixer and accordingly, no undesirable effects on health and environments attributed to the powder dust of the pigment may be caused and therefore it is preferable to use the pigment-containing paving resin composition.

As described above, the important points of the paving resin composition of the present invention are as follows. That is, the paving resin composition containing at least the specified ethylene-vinyl acetate copolymer is made to be in small lumps so as to prevent adhesion of the lumps to one another during storage or transportation and sticking of the lumps to a mixer and to melt them within a short time.

Moreover, the addition ratio of the specified ethylene-vinyl acetate copolymer is controlled to be 30 to 70% by weight, so that the composition can be melted within a short time, can be excellent in wettability and adhesion property to the aggregate, and thus be capable of providing a paved face having excellent durability and free from deformation during summer and cracking during winter.

Further, the paving resin composition in the form of small lumps of the present invention can be wrapped in a polybag with a prescribed capacity, so that the composition can be thrown directly into a mixer from the wrapped state and simultaneously weighed without being passed through a measurement apparatus and accordingly, washing work of the measurement apparatus or pipes is made unnecessary and the workability is increased.

Further, with respect to the resin composition containing a pigment, it is not necessary to add the pigment separately to the mixer, so that the paving resin composition free from a problem on health and environments attributed to powder dust and the composition having good workability can be provided.

Hereinafter, the present invention will be described in more detail along with Examples and Comparative Examples, however, the present invention is in no way limited thereby.

In the following description, "%" and "part" mean "% by weight" and "part by weight" respectively, unless otherwise specified.

Evaluation of the paving resin composition was carried out according to methods described in "Petroleum Asphalt" JIS K2207 and the respective items of softening point, penetration degree, elongation, and melting property were measured.

According to the following standards, the melting property was evaluated based on how long it took to entirely melt 5g of each paving resin composition when the composition was heated on an aluminum foil by a hot plate at 130°C.
<3 minutes: ○,
3 to 5 minutes: Δ, and
>5 minutes: ×.

The adhesion property of each paving resin composition was evaluated by investigating the adhesion state of the small lumps after 100g of the paving resin composition was left for 1 week in a thermostat at 30°C.

The adhesion amount of the small lumps was less than 1/10: O,

The adhesion amount of the small lumps was 1/10 to less than 1/2: Δ, and

The adhesion amount of the small lumps was 1/2 or more: ×.

According to the following standards, the low temperature property was evaluated based on whether the paving resin composition could be broken by hand or not after 5g of each paving resin composition was heated and melted on an aluminum foil by a hot plate at 130°C and left for one night in a low temperature warehouse at 5°C.
not broken: ○,
not broken but cracked: Δ, and
broken:×.

With respect to the paving asphalt compositions containing aggregates, evaluation was carried out by the Marshall Stability Test and Immersion Marshall Stability Test.

The Marshall Stability Test was carried according to the method described in "Paving Testing Handbook", published by Japan Road Association in Nov. 1986.

The preparation conditions of test specimens were as follows.

Each mixture containing an aggregate and each resin composition obtained in the Examples and Comparative Examples was mixed at 150 to 160°C and compacted at 130 to 140°C. The number of the times of compaction was 50 times in both faces.

Each specimen obtained in the above-mentioned preparation conditions was subjected to the Marshall Stability Test as it was and additionally, the specimen was subjected to the Marshall Stability Test after immersion in a thermostat water tank at 60°C for 48 hours.

The residual stability was calculated according to the following equation.

The residual stability (%) = [stability after 60°C-48 hour immersion in water/stability before immersion in water] ×100:

### Example 1

Ultrathene 760 (Trade name: manufactured by Tosoh Corporation, vinyl acetate content 42%, melting temperature 48°C, melt flow rate 70 g/10 min) 525 g as an ethylene-vinyl acetate copolymer, Neopolymer E100 (Trade name: manufactured by Nippon Petrochemicals Co., Ltd.: softening point 90°C, melt viscosity 200 cps) 750 g as a petroleum type resin, and AROMAX-4 (Trade name: manufactured by Fuji Kosan Co., Ltd.) 225 g as a process oil were mixed by a mixer and heated at 120°C to melt the mixture and the mixture was kneaded by a biaxial extruder and the extruded mixture was cooled and cut into small lumps with φ4 mmx5 mm to obtain a paving resin composition (A).

The main production conditions and properties are shown in Table 1 and Table 2, respectively, and the obtained paving resin composition (A) was found to have a softening point of 68.0°C, a penetration degree of 40, and an elongation of 52 cm.

### Examples 2 to 10 and Comparative Examples 1 to 5

The paving resin compositions (B) to (O) were produced in the same manner as in Example 1, except the type and the amount of the ethylene-vinyl acetate copolymer, the type and the amount of the petroleum type resin, the type and the amount of the additive, and the size of the small lumps were changed variously and the main production conditions and properties are shown in Table 1 and Table 2, respectively.

The trade names of the products and the names of the makers of the product to be used in Examples 2 to 10 and Comparative Examples 1 to 5 are as follows.

### Ethylene-vinyl acetate copolymers

Ultrathene 735: manufactured by Tosoh Corporation.
Ultrathene 726: manufactured by Tosoh Corporation.
Ultrathene 725: manufactured by Tosoh Corporation.
Ultrathene 727: manufactured by Tosoh Corporation.
Ultrathene 633: manufactured by Tosoh Corporation.
Ultrathene 515: manufactured by Tosoh Corporation.
Sumitate KF-11: manufactured by Sumitomo Chemical Co., Ltd.,
Sumitate MB-11: manufactured by Sumitomo Chemical Co., Ltd.,
Sumitate RB-11: manufactured by Sumitomo Chemical Co., Ltd.,
Evaflex 40W: manufactured by Du-Pont Mitsui Polychemicals Co., Ltd.,
Evaflex EV45X: manufactured by Du-Pont Mitsui Polychemicals Co., Ltd.,

### Petroleum type resin

Neopolymer-E100: manufactured by Nippon Petrochemicals Co., Ltd.,
Neopolymer-S: manufactured by Nippon Petrochemicals Co., Ltd.,
Petrotak 70: manufactured by Tosoh Corporation.
Petcoal LX: manufactured by Tosoh Corporation.
YS Resin T085: manufactured by Yasuhara Chemical Co., Ltd.,
Arkon P-70: manufactured by Arakawa Chemical Industries Ltd.,
Marukarez M-905A: manufactured by Maruzen Petrochemical Co., Ltd.,
Marukarez H-700F: manufactured by Maruzen Petrochemical Co., Ltd.,

### Viscosity adjustment agent

Process oil: Diana Oil AH-24: manufactured by Idemitsu Kosan Co., Ltd.,
Liquid rubber: Polybutadiene R-15HT: manufactured by Idemitsu Kosan Co., Ltd.,
Process oil: AROMAX-3: manufactured by Fuji Kosan Co., Ltd.,
Process oil AROMAX-5: manufactured by Fuji Kosan Co., Ltd.,
Epoxy resin: Epichlon 1050: manufactured by Dainippon Ink and Chemicals Inc.;
Rosin: manufactured by Arakawa Chemical Industries, Ltd., and
Low density polyethylene: Petrothene 225: manufactured by Tosoh Corporation.

**Table 1**

| Examples and Comp. Examples | Paving resin composition | | | | | | | | | | | | | | |
|---|---|---|---|---|---|---|---|---|---|---|---|---|---|---|---|
| | Ethylene-vinyl acetate copolymer | | | | | | Petroleum type resin | | | | | Viscosity adjustment agent | | | Symblol of paving resin composition |
| | Trade name | Vinyl acetate content | Melting temperature | Melt flow rate | Amount | Content | Trade name | Softening point | Melt viscosity | Amount | Content | Trade name | Amount | Content | |
| | | (wt. %) | (°C) | (g/10min) | (g) | (%) | | (°C) | (160°C, cps) | (g) | (%) | | (g) | (%) | |
| Ex. 1 | Ultrathene 760 | 42 | 48 | 70 | 525 | 35 | Neopolymer-E100 | 90 | 200 | 750 | 50 | AROMAX-4 | 225 | 15 | A |
| Ex. 2 | Sumitate KF-11 | 28 | 64 | 450 | 550 | 37 | Petrotak 70 | 70 | 180 | 800 | 53 | Diana oil AH-24 | 150 | 10 | B |
| Ex. 3 | Ultrathene 735 | 28 | 69 | 1000 | 600 | 40 | Neopolymer-E100 Marukarez M-905A | 90 105 | 200 200 | 675 75 | 45 5 | AROMAX-3 | 150 | 10 | C |
| Ex. 4 | Ultrathene 726 | 31 | 54 | 700 | 600 | 40 | Petrotak 70 | 70 | 180 | 750 | 50 | .AROMAX-3 | 150 | 10 | D |
| Ex. 5 | Sumitate MB-11 | 32 | 63 | 60 | 600 | 40 | Arkon P-70 | 70 | 200 | 675 | 45 | Polybutediene R-15HT AROMAX-3 | 75 150 | 5 10 | E |
| Ex. 6 | Sumitate RB-11 | 41 | 63 | 60 | 570 | 38 | Marukarez H-700F | 95 | 700 | 750 | 50 | Epichlon 1050 Diana oil AH-24 | 45 139 | 3 9 | F |
| Ex. 7 | Ultrathene 725 | 28 | 62 | 1000 | 600 | 40 | Neopolymer-E100 | 90 | 200 | 720 | 48 | Rosin AROMAX-5 | 30 150 | 2 10 | G |
| Ex. 8 | Ultrathene 727 | 28 | 52 | 2200 | 500 | 34 | Petrotak 70 YS Resin T085 | 70 85 | 180 300 | 800 200 | 53 13 | - | - | - | H |
| Ex. 9 | Evaflex 40W | 41 | 40 | 65 | 550 | 37 | Petrotak 70 | 70 | 180 | 945 | 63 | - | - | - | I |
| Ex. 10 | Ultrathene 633 | 20 | 83 | 20 600 | | 40 | Petrotak 70 | 70 | 180 | 900 | 60 | - | - | - | J |
| Comp. Ex. 1 | Ultrathene 515 | 6 | 101 | 2.5 | 500 | 33 | Neopolymer-S | 95 | 400 | 1000 | 67 | - | - | - | K |
| Comp. Ex. 2 | - | - | - | - | - | - | Petcoal LX | 98 | 1500 | 1000 | 67 | Petrothene 225 | 500 | 33 | L |
| Comp. Ex. 3 | Evaflex EV45X | 46 | < 40 | 100 | 600 | 40 | Neopolymer-S | 95 | 400 | 700 | 47 | AROMAX-3 | 195 | 13 | M |
| Comp. Ex. 4 | Ultrathene 760 | 42 | 48 | 70 | 1100 | 73 | Petrotak 70 | 70 | 180 | 400 | 27 | - | - | - | N |
| Comp. Ex. 5 | Sumitate KF-11 | 28 | 64 | 450 | 400 | 27 | Neopolymer-EI00 | 90 | 200 | 1100 | 73 | - | - | - | O |

**Table 2**

| Examples and Comp. Examples | Characteristics of paving resin composition | | | | | | |
|---|---|---|---|---|---|---|---|
| | Form | Softening point (°C) | Penetration degree (25°C, 1/10mm) | elongation Elongation (15°C, cm) | Melting property | Adhesion property | Low temperature property |
| Ex. 1 | Small lumps φ 4mm × 5mm | 68.0 | 40 | 52 | ○ | ○ | ○ |
| Ex. 2 | Small lumps φ 5mm × 10mm | 68. 5 | 45 | 44 | ○ | ○ | ○ |
| Ex. 3 | Small lumps φ 5mm × 10mm | 70. 2 | 42 | 42 | ○ | ○ | ○ |
| Ex. 4 | Small lumps φ 4 mm × 6mm | 60. 0 | 45 | 40 | ○ | ○ | ○ |
| Ex. 5 | Small lumps φ 4mm × 5mm | 68. 5 | 42 | 36 | O | ○ | ○ |
| Ex. 6 | Small lumps φ 5mm × 8mm | 72.0 | 41 | 35 | ○ | ○ | ○ |
| Ex. 7 | Small lumps φ 4mm × 6mm | 66.0 | 40 | 35 | ○ | ○ | ○ |
| Ex. 8 | Small lumps φ 6mm × 10mm | 60.7 | 43 | 41 | ○ | Δ | ○ |
| Ex. 9 | Small lumps φ 6mm × 10mm | 53.5 | 35 | 26 | Δ | ○ | ○ |
| Ex. 10 | Small lumps φ 5mm × 10mm | 75. 2 | 15 | 4 | Δ | ○ | Δ |
| Comp. Ex. 1 | Small lumps φ 5mm × 10mm | 96.8 | 2 | 1 | × | ○ | × |
| Comp. Ex. 2 | Small lumps φ 5mm × 10mm | 101. 5 | 0 | 0 | × | ○ | × |
| Comp. Ex. 3 | Not formed into small lumps | | | | | | |
| Comp. Ex. 4 | Small lumps φ 5mm × 10 mm | 52.0 | 12 | 28 | × | × | ○ |
| Comp. Ex. 5 | Small lumps φ 5mm × 10mm | 75. 2 | 2 | 2 | Δ | × | × |

### Examples 11 to 20 and Comparative Examples 6 to 10

The respective paving resin compositions (A) to (O) obtained in Examples 1 to 10 and Comparative Examples 1 to 5, 750 g each and various pigments 250 g each were mixed and the respective mixtures were melted at 120°C and kneaded by a biaxial extruder and the extruded mixtures were cooled and cut into small lumps with φ4 mmx6 mm to obtain paving resin compositions.

The paving resin compositions (F), (G), (J), and (M) were used as they were, without being mixed with pigments.

Next, mixtures containing 94% of an aggregate containing 48% #6 crushed stone, 23% coarse sand and 23% fine sand, and 6% of the paving resin compositions obtained in the Examples 11 to 20 and Comparative Examples 6 to 10 were mixed at 150 to 160°C and compacted at 130 to 140°C to produce respective paving asphalt compositions. The number of the times of compaction was 50 times in both faces.

The properties of the obtained paving asphalt compositions are shown in Table 3.

The above-mentioned pigment-containing paving resin compositions and paving resin compositions containing no pigment were thrown directly into a mixer without passing through a measurement apparatus, so that washing of the measurement apparatus and pipes was unnecessary and thus the workability was excellent.

### Comparative Example 11

A commercialized heated asphalt resin (P) 750 g and hydrated yellow iron oxide 250 g were melted at 120°C and kneaded by a biaxial extruder and the extruded mixture was cooled and cut into small lumps with φ4 mmx6 mm to obtain a paving resin composition. As shown in Table 3, the pigment-mixed resin composition in small lumps caused adhesion of the small lumps during storage at room temperature and no paving asphalt composition was produced.

**Table 3**

| Examples and Comp. Examples | Paving asphalt composition | | | | | | | Marshall Stability Test | | Immersion Marshall Stability Test | | Residual stability (b)/(a) × 100 (%) |
|---|---|---|---|---|---|---|---|---|---|---|---|---|
| | Pigment-containing or -not containing paving resin compositon | | | | | | Amount of aggregate (%) | | | | | |
| | Paving resin composition | | Pigment | | | Amount (%) | | Stability (a) (kN) | Flow value (1/100cm) | Stability (b) (kN) | Flow value (1/100cm) | |
| | Symbol | Amount (g) | Kind | Amount (g) | Amount (parts*) | | | | | | | |
| Ex. 11 | A | 750 | Red iron oxide (hematite) | 250 | 33 | 6 | 94 | 10.5 | 40 | 9.2 | 40 | 87.6 |
| Ex. 12 | B | 750 | Clay/Titanium oxide | 200/50 | 33 | 6 | 94 | 9.8 | 33 | 8.6 | 33 | 87.8 |
| Ex. 13 | C | 750 | Hydrated yellow iron oxide (goethite) | 250 | 33 | 6 | 94 | 10.2 | 37 | 9.1 | 33 | 89.2 |
| Ex. 14 | D | 750 | Clay/Yellow iron hydroxide | 50/200 | 33 | 6 | 94 | 9.6 | 33 | 8.6 | 34 | 89.6 |
| Ex. 15 | E | 750 | Clay | 250 | 33 | 6 | 94 | 9.5 | 33 | 8.6 | 33 | 90.5 |
| Ex. 16 | F | - | - | - | - | 6 | 94 | 10.8 | 41 | 9.8 | 38 | 90.7 |
| Ex. 17 | G | - | - | - | - | 6 | 94 | 9.2 | 31 | 8.1 | 32 | 88.0 |
| Ex. 18 | H | 750 | Hydrated yellow iron oxide (goethite) | 250 | 33 | 6 | 94 | 10.0 | 30 | 8.3 | 31 | 83.0 |
| Ex. 19 | **I** | 750 | Hydrated yellow iron oxide (goethite) | 250 | 33 | 6 | 94 | 10.6 | 31 | 8.7 | 33 | 82.1 |
| Ex. 20 | J | - | - | - | - | 6 | 94 | 7.5 | 25 | 5.7 | 23 | 76.0 |
| Comp. Ex. 6 | K | 750 | Hydrated yellow iron oxide (goethite) | 250 | 33 | 6 | 94 | 6.5 | 25 | 4.7 | 23 | 72.3 |
| Comp. Ex. 7 | L | 750 | Red iron oxide (hematite) | 250 | 33 | 6 | 94 | 3.6 | 16 | 3.2 | 11 | 88.9 |
| Comp. Ex. 8 | M | - | - | - | - | 6 | 94 | 4.5 | 20 | 3.8 | 12 | 84.4 |
| Comp. Ex. 9 | N | 750 | Red iron oxide (hematite) | 250 | 33 | 6 | 94 | 7.5 | 22 | 6.6 | 20 | 88.0 |
| Comp. Ex. 10 | O | 750 | Hydrated yellow iron oxide (goethite) | 250 | 33 | 6 | 94 | 8.5 | 20 | 4.1 | 20 | 48.2 |
| Comp. Ex. 11 | P | 750 | Hydrated yellow iron oxide (goethite) | 250 | 33 | 6 | 94 | Small lumps adhere one another. | | | | |

| | | | | | | | | | | | | |
|---|---|---|---|---|---|---|---|---|---|---|---|---|
| * Parts based on 100 parts of thermoplastic resin composition | | | | | | | | | | | | |

### Example 21

In an actual asphalt plant, a paving asphalt composition was produced in the same manner as in Example 11, except that the aggregate previously heated to 190°C and the pigment-containing paving resin composition were mixed at 170°C for 60 seconds in a mixer. As the aggregate used, 92% of the aggregate containing 40% #6 crushed stone, 20% #7 crushed stone, 29% coarse sand and 3% stone powder, and 8% of a pigment-containing paving resin composition were mixed to obtain a paving asphalt composition. The properties of the obtained paving asphalt composition are shown in Table 4.

The Wheel Tracking Test was carried out according to a method described in "Paving Testing Handbook", published by Japan Road Association in Nov. 1986. The dynamic stability (DS) measured by the Wheel Tracking Test is preferably 6,000 times/min or higher.

The color change with lapse of time was measured for respective specimens of Marshall Stability Test which were exposed outdoors for 9 months and stored indoors. The measurement was evaluated based on the ΔE value using Color-Guide (BYK-Gardner). The ΔE is preferably 5.0 or lower.

### Comparative Example 12

A paving asphalt composition was produced in the same manner as in Example 21, except that a commercialized liquid decolored asphalt was used in place of the thermoplastic resin composition, that the composition was thrown into the mixer after having passed through a measurement apparatus, and that separately a pigment was added directly into the mixer. The properties of the obtained paving asphalt composition are shown in Table 4.

From the results in Table 4, it is made clear that the paving asphalt composition of Example 21 had ΔE value smaller than that of the composition using a conventional liquid asphalt of Comparative Example 12 and therefore the paving asphalt composition was less discolored with the lapse of time (discoloration) than the paving asphalt composition of Comparative Example 12. The paving asphalt composition of Example 21 was also found excellent in dynamic stability by the Wheel Tracking Test.

Further, since the paving asphalt composition of Example 21 was produced using the pigment-containing paving resin composition, it was not necessary to add the pigment separately to the mixer and the workability was excellent and no undesirable effect on health and work environments attributed to powder dust of the pigment was caused.

On the other hand, in Comparative Example 12, the liquid decolored asphalt was thrown to the mixer after having passed through the measurement apparatus and separately the pigment was added directly to the mixer, washing work for the measurement apparatus and pipes was needed to thus worsen the workability and the workability and working environments were deteriorated by the powder dust of the pigment.

**Table 4**

| Examples and Comp. Examples | Paving asphalt composition | | | | | | | Marshall Stability Test | | Dynamic stability by Wheel Tracking Test (DS) | Change in color with lapse of time |
|---|---|---|---|---|---|---|---|---|---|---|---|
| | Pigment-containing paving resin composition | | | | | | Amount of aggregate | | | | |
| | Paving resin composition | | Pigment | | | Amount | | Stability | Flow value | | |
| | Symbol | Amount (g) | Kind | Amount (g) | Amount (parts*) | (%) | (%) | (kN) | (1/100cm) | (Times/mm) | (ΔE) |
| Ex. 21 | A | 750 | Red iron oxide (hematite) | 250 | 33 | 8 | 92 | 10 | 39 | 10500 | 2.8 |
| Comp. Ex. 12 | Commercialized liquid decolored asphalt | 750 | Red iron oxide (hematite) | 250 | 33 | 8 | 92 | 8 | 30 | 4100 | 7.2 |

| | | | | | | | | | | | |
|---|---|---|---|---|---|---|---|---|---|---|---|
| *) Parts based on 100 parts of thermoplastic resin composition | | | | | | | | | | | |

### INDUSTRIAL APPLICABILITY

The paving resin composition according to the present invention is melted within a short time, excellent in wettability and adhesion property to aggregates, and capable of providing a paved face excellent in durability free from problems of deformation during summer and cracking during winter.

Further, the paving resin composition of the present invention is formed into small lumps so as not to cause adhesion of the lumps to one another during storage or transportation and sticking of the lumps to a mixer and so as to melt them within a short time, and with respect to the pigment-containing paving resin composition, it is made possible to provide a paving resin composition with good workability free from undesirable effects on health and environments attributed to powder dust at the time of feeding a pigment.

Furthermore, at the time of obtaining a paving asphalt composition by mixing the paving resin composition of the present invention and an aggregate, the paving resin composition in small lumps of the present invention can be wrapped in a polybag, so that a prescribed amount of the composition can be thrown directly into a mixer from the wrapped state without being passed through a measurement apparatus and accordingly, washing work of the measurement apparatus or pipes is made unnecessary and the workability is thus significantly increased.

## Claims

1. A paving resin composition which comprises a thermoplastic resin composition in small lumps of 2 to 30 mm as an average value of the maximum diameter, wherein the thermoplastic resin composition contains 30 to 70% by weight of an ethylene-vinyl acetate copolymer having a vinyl acetate content of 20 to 45% by weight and a melting temperature of 40 to 100 °C, and 30 to 70% by weight in total of petroleum type resins and a viscosity adjustment agent in which the viscosity adjustment agent is in an amount of at highest 25% by weight.

2. The paving resin composition of claim 1, wherein the viscosity adjustment agent is at least one substance selected from process oils, liquid rubbers, epoxy resins, rosins, and low density polyethylenes.

3. The paving resin composition of claim 1 or 2, wherein the ethylene-vinyl acetate copolymer has a melt flow rate of 50 to 3,000 g/10 min.

4. The paving resin composition of any one of claims 1 to 3 which further contains 5 to 50 parts by weight of a pigment based on 100 parts by weight of the thermoplastic resin composition.

5. A method for producing a paving asphalt composition which comprises the steps of:
directly throwing the paving resin composition as defined in any one of claims 1 to 4 into a mixer without passing through a measuring apparatus, and
carrying out mixing of 3 to 10% by weight of the paving resin composition with 97: to 90% by weight of an aggregate at 150 to 200 °C.

6. The method for producing a paving asphalt composition of claim 5, which further comprises previously heating the aggregate at 160 to 220°C.

7. Use of the paving resin composition as defined in any one of claims 1 to 4 for preparing a paving asphalt composition which contains 3 to 10 % by weight of the paving resin composition and 97 to 90 % by weight of an aggregate.

## Patentansprüche

1. Eine Harzzusammensetzung für Straßen- bzw. Gehwegbelag, welche eine thermoplastische Harzzusammensetzung in Form kleiner Klumpen von 2 bis 30 mm als Mittelwert des maximalen Durchmessers umfasst, wobei die thermoplastische Harzzusammensetzung 30 bis 70 Gewichts% eines Ethylen-Vinylacetat-Copolymers mit einem Vinylacetat-Gehalt von 20 bis 45 Gewichts% und einer Schmelztemperatur von 40 bis 100°C, und in Summe 30 bis 70 Gewichts% von petroleumartigen Harzen und eines Mittels zur Einstellung der Viskosität enthält, wobei das Mittel zur Einstellung der Viskosität in einer Menge von maximal 25 Gewichts% vorhanden ist.

2. Die Harzzusammensetzung für Straßen- bzw. Gehwegbelag gemäß Anspruch 1, wobei das Mittel zur Einstellung der Viskosität wenigstens eine Substanz ausgewählt aus Verfahrensölen, flüssigen Kautschuken, Epoxyharzen, Terpentinharzen, und Polyethylenen niederer Dichte ist.

3. Die Harzzusammensetzung für Straßen- bzw. Gehwegbelag gemäß Anspruch 1 oder 2, wobei das Ethylen-Vinylacetat-Copolymer eine Schmelzflussrate von 50 bis 3000 g/ 10 min aufweist.

4. Die Harzzusammensetzung für Straßen- bzw. Gehwegbelag gemäß einem der Ansprüche 1 bis 3, welche ferner 5 bis 50 Gewichtsteile eines Pigments enthält, basierend auf 100 Gewichtsteilen der thermoplastischen Harzzusammensetzung.

5. Ein Verfahren zur Herstellung einer Zusammensetzung für Straßen- bzw. Gehwegasphalt, welches die Schritte umfasst:
direktes Geben der Harzzusammensetzung für Straßen- bzw. Gehwegbelag wie in einem der Ansprüche 1 bis 4 definiert in einen Mischer, ohne einen Messapparat zu durchlaufen, und Durchführen von Mischen von 3 bis 10 Gewichts% der Harzzusammensetzung für Straßen- bzw. Gehwegbelag mit 97 bis 90 Gewichts% eines Aggregats bei 150 bis 200°C.

6. Das Verfahren zur Herstellung einer Zusammensetzung für Straßen- bzw. Gehwegasphalt gemäß Anspruch 5, welches ferner vorheriges Erwärmen des Aggregats bei 160 bis 220°C umfasst.

7. Verwendung der Harzzusammensetzung für Straßen- bzw. Gehwegbelag wie in einem der Ansprüche 1 bis 4 definiert zur Herstellung einer Zusammensetzung für Straßen- bzw. Gehwegasphalt, welche 3 bis 10 Gewichts% der Harzzusammensetzung für Straßen- bzw. Gehwegbelag und 97 bis 90 Gewichts% eines Aggregats enthält.

## Revendications

1. Composition de résine de pavage qui comprend une composition de résine thermoplastique en petits morceaux de 2 à 30 mm comme valeur moyenne du diamètre maximal, dans laquelle la composition de résine thermoplastique contient de 30 à 70 % en poids d'un copolymère d'éthylène-acétate de vinyle ayant une teneur en acétate de vinyle de 20 à 45 % en poids et une température de fusion de 40 à 100°C, et de 30 à 70 % en poids au total de résines de type pétrolier et un agent d'ajustement de la viscosité dans laquelle l'agent d'ajustement de la viscosité est présent dans une quantité d'au plus 25 % en poids.

2. Composition de résine de pavage selon la revendication 1, dans laquelle l'agent d'ajustement de la viscosité est au moins une substance choisie parmi des huiles plastifiantes, des caoutchoucs liquides, des résines époxy, des colophanes et des polyéthylènes faible densité.

3. Composition de résine de pavage selon la revendication 1 ou 2, dans laquelle le copolymère d'éthylène-acétate de vinyle présente une vitesse de fusion de 50 à 3 000 g/10 min.

4. Composition de résine de pavage selon l'une quelconque des revendications 1 à 3, laquelle contient en plus de 5 à 50 parties en poids d'un pigment rapporté à 100 parties en poids de la composition de résine thermoplastique.

5. Procédé de production d'une composition d'asphalte de pavage qui comprend les étapes consistant :
à jeter directement la composition de résine de pavage comme définie dans l'une quelconque des revendications 1 à 4 dans un mélangeur sans passer par un appareil de mesure, et
à réaliser le mélange de 3 à 10 % en poids de la composition de résine de pavage avec de 97 à 90 % en poids d'un agrégat à de 150 à 200°C.

6. Procédé de production d'une composition d'asphalte de pavage selon la revendication 5, laquelle comprend de plus un chauffage préalable de l'agrégat à de 160 à 220°C.

7. Utilisation de la composition de résine de pavage comme définie dans l'une quelconque des revendications 1 à 4 pour la préparation d'une composition d'asphalte de pavage qui contient de 3 à 10 % en poids de la composition de résine de pavage et de 97 à 90 % en poids d'un agrégat.
